# EUROPEAN PATENT SPECIFICATION

(11) **EP 1 766 249 B1**
(45) Date of publication and mention of the grant of the patent: **07.01.2009**
(21) Application number: 05748782.9
(22) Date of filing: 03.06.2005
(51) Int. Cl.: F16C 1/10, F16H 61/36, F16F 1/38, F16F 15/08

(54) **VIBRATION DAMPER**
SCHWINGUNGSDÄMPFER
AMORTISSEUR DE VIBRATIONS

(30) Priority: 14.06.2004 SE 0401501
(43) Date of publication of application: 28.03.2007
(73) Proprietor: Scania CV AB (publ), 151 87 Södertälje (SE)
(72) Inventor: JANSSON, Torbjörn, S-641 36 Katrineholm (SE); RONVALL, Lars, S-641 35 Katrineholm (SE); NILSSON, Hilding, S-155 93 Nykvarn (SE)
(74) Representative: Sjögren Paulsson, Stina
(86) International application number: PCT/SE2005/000839
(87) International publication number: WO 2005/121571

(56) References cited:
- US-A- 5 671 908
- PATENT ABSTRACTS OF JAPAN vol. 2002, no. 09 04 September 2002 & JP 2002 130244 A (NOK VIBRACOUSTIC KK) 09 May 2002

## Description

### TECHNICAL FIELD

The invention relates to a vibration damper for a control cable.

### BACKGROUND

Particularly where a control cable is used for changing gear, the fastening to the gearbox of the casing for the cable's wire needs to be damped. Without such damping, vibration and noise from the gearbox is transmitted to the gear lever. The only heavy vehicles in which wire control is at present commonly used are buses. A damping unit with four rubber pads in an inner and an outer sheetmetal console is known for buses. Disadvantages of such a unit are that it has many constituent parts, which makes it heavy and take a long time to fit, and that it occupies space and is expensive.

A vibration damper according to the preamble of claim 1 is disclosed in JP-A - 2002 130 244.

### SUMMARY OF THE INVENTION

An object of the present invention is to provide a vibration damper of the kind indicated in the introduction which eliminates the advantages indicated above of the state of the art.

This is achieved by the features indicated in the attached claims.

According to the invention, the vibration damper comprises the features of claim 1. damping material. Such a vibration damper with only one damping body which coaxially or annularly surrounds the casing represents a considerably simplification compared with the state of the art.

Stop means are provided to limit axial relative movement between the inner sleeve and the outer sleeve. The stop means prevent the casing from moving too far on the occasion of rapid gearchanges or so-called panic gearchanges, e.g. when the driver has to engage a lower gear quickly on an uphill run, an operation which involves significantly greater forces than in a normal gearchange. Using such stop means also makes it possible to use a more flexible material with gentler damping characteristics.

The inner sleeve and the outer sleeve may be connected firmly to the vibration-damping material in order to constitute a unit in the form of a conventional bushing. Such bushings are known for various other purposes and are stocked by bushing suppliers.

Other features and advantages of the invention are indicated by the following detailed description and the claims.

### BRIEF DESCRIPTION OF THE DRAWINGS

FIG. 1 is an exploded side view of a gearchange cable and a vibration damper according to the invention which is provided for said cable;
FIG. 2 depicts on a larger scale the gearchange cable with the vibration damper according to FIG. 1 fitted to a gearbox; and
FIG. 3 is a sectional view along the line 3-3 in FIG. 2.

### DETAILED DESCRIPTION OF AN EMBODIMENT

The schematic diagrams in the drawings depict a vibration damper 10 adapted to being placed on a casing 42 of a gearchange cable 40. The cable 40 is a gearchange cable of pull and push type, which means that the wire 44 in the casing 42 has to be able to transmit both pulling and pushing forces to a gearchange mechanism for a gearbox 50 of a motor vehicle such as a heavy truck.

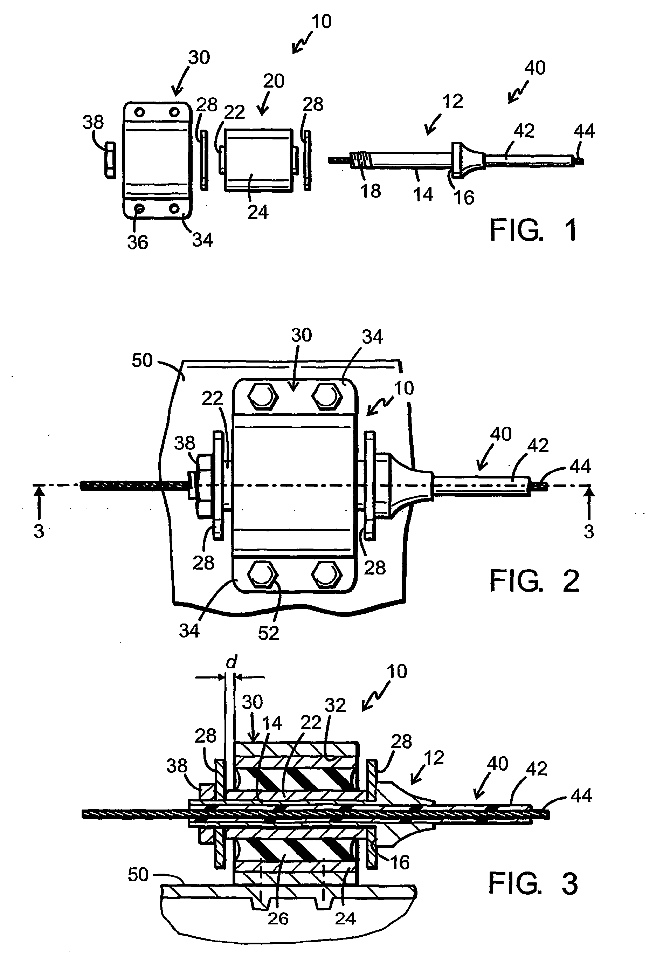

As particularly indicated in FIG. 1, the end of the cable sleeve 42 which is to be connected to the vibration damper 10 is firmly connected to an endpiece 12. The endpiece 12, as also other undepicted end parts of the cable 40, are supplied in this preassembled state by the cable supplier.

The vibration damper 10 comprises a damping element 20 in the form of a bushing comprising a hollow cylindrical rubber damping body 26 (FIG. 3) vulcanised to a pair of concentric steel sleeves 22, 24, i.e. an inner sleeve 22 and an outer sleeve 24.

The outer sleeve of the damping element 20 is adapted to being pressed into and held firmly by pressure fit in an aperture 32 (FIG. 3) in a retainer 30 for the damping element 20. The retainer 30 is itself adapted to being connected firmly to the gearbox 50 by fastening elements 52 which extend through holes 36 in connection flanges 34 of the retainer 30.

As may in particular be seen in FIG. 3, the endpiece 12 of the cable casing 40 is fastened to the vibration damper 10 by the fact that a stem 14 of the endpiece 12 is pushed in through one end of the inner sleeve 22 of the damping element until the inner sleeve engages with a stop 16 of the endpiece 12. The endpiece 12 is fixed axially at the opposite end of the inner sleeve 22 by a nut 38 which engages with threads 18 on the stem 14.

To limit axial movement of the cable casing 40 and the endpiece12, there are stop means 28, 28 each on their respective side of and at a distance d from the damping element 20. As indicated above, violent or panicky operation of a gear lever (not depicted) which is connected to the wire 44 will also affect to a greater or lesser extent the cable casing 42. If the cable casing 42 tends to move further than the distance *d*, the respective stop means 28 will then engage with the outer sleeve 24 of the damping element 20 and prevent further movement until the elasticity of the damping body 26 brings the cable casing 40 back to the central position depicted in FIG. 3. This arrangement makes it possible to use a softer or more flexible rubber/damping material with great vibration-damping capacity without risk of the damping material 26 being damaged, e.g. on the occasion of a panic gearchange. As may be seen from the drawings, the stop means may take the form of separate washers 28. The washers 28 are kept at the distance *d* from the outer sleeve 24 by the fact that the inner sleeve 22 protrudes for a corresponding distance *d* from each side of the damping element 20.

## Claims

1. A vibration damper (10) for a control cable (40), comprising an inner sleeve (22) adapted to being connected firmly to an outside of a casing (42) for the cable;
an outer sleeve (24) adapted to being connected firmly to a vibration-prone vehicle component (50) coaxially with the inner sleeve (22); and
an annular intermediate space between the inner sleeve (22) and the outer sleeve (24), which intermediate space is filled with a vibration-damping material (26), **characterised in** stop means (28; 28) which protrude on their respective sides of the inner sleeve (22), which are kept at a distance (d) from the outer sleeve (24), and which is adapted to engaging with the outer sleeve (24) in order to limit axial relative movement between the inner sleeve (22) and the outer sleeve (24).

2. A vibration damper according to claim 1, whereby the inner sleeve (22) is intended to be slipped over, and be axially fixed to, a retainer (12) which is firmly connected to the casing (42).

3. A vibration damper according to claim 2, whereby the stop means comprise radial flanges (28; 28) which protrude from the retainer (12)

4. A vibration damper according to claim 3, whereby the flanges comprise separate washers on their respective sides of the inner sleeve (22).

5. A vibration damper according to any one of the foregoing claims, whereby the outer sleeve (24) is intended to be inserted in and firmly connected to a cylindrical retainer (30) which itself is intended to be firmly connected to the vehicle component (50)

6. A vibration damper according to any one of the foregoing claims, whereby the inner sleeve (22) and the outer sleeve (24) are firmly connected to the vibration-damping material (26) in order to constitute a unit in the form of a conventional bushing (20).

7. Use of a bushing (20) according to claim 6 in a vibration damper according to any one of claims 1-5.

## Patentansprüche

1. Schwingungsdämpfer (10) für ein Steuerseilzug (40), umfassend
- eine innere Hülse (22), die dazu ausgelegt ist, fest mit einer Außenseite einer Hülle (42) für das Seil gekoppelt zu werden;
- eine äußere Hülse (24), die dazu ausgelegt ist, fest mit einem schwingungsanfälligen Fahrzeugbauteil (50) koaxial zu der inneren Hülse (22) gekoppelt zu werden; und
- einen ringförmigen Zwischenraum zwischen der inneren Hülse (22) und der äußeren Hülse (24),
wobei der Zwischenraum mit einem Schwingungsdämpfungsmaterial (26) ausgefüllt ist,
**gekennzeichnet durch** Anschlagmittel (28; 28), die an ihren jeweiligen Seiten der inneren Hülse (22) vorstehen, die in einem Abstand (d) von der äußeren Hülse (24) gehalten werden, und die dazu ausgelegt sind, mit der äußeren Hülse (24) zusammenzuwirken, um eine axiale Relativbewegung zwischen der inneren Hülse (22) und der äußeren Hülse (24) zu begrenzen.

2. Schwingungsdämpfer nach Anspruch 1,
wobei die innere Hülse (22) vorgesehen ist, um über eine Halterung (12) geschoben und an dieser axial befestigt zu werden, die fest mit der Hülle (42) verbunden ist.

3. Schwingungsdämpfer nach Anspruch 2,
wobei die Anschlagmittel radiale Flansche (28; 28) umfassen, die von der Halterung (12) vorstehen.

4. Schwingungsdämpfer nach Anspruch 3,
wobei die Flansche an ihren jeweiligen Seiten der inneren Hülse (22) separate Scheiben umfassen.

5. Schwingungsdämpfer nach einem der vorangehenden Ansprüche,
wobei die äußere Hülse (24) vorgesehen ist, um in eine zylinderförmige Halterung (30) eingebracht und mit dieser fest verbunden zu werden, die selbst vorgesehen ist, um fest mit dem Fahrzeugbauteil (50) gekoppelt zu werden.

6. Schwingungsdämpfer nach einem der vorangehenden Ansprüche,
wobei die innere Hülse (22) und die äußere Hülse (24) fest mit dem Schwingungsdämpfungsmaterial (26) gekoppelt sind, um eine Einheit in Form von einer konventionellen Buchse (20) zu bilden.

7. Verwendung einer Buchse (20) nach Anspruch 6 in einem Schwingungsdämpfer nach einem der Ansprüche 1-5.

## Revendications

1. Amortisseur de vibrations (10) pour câble de commande (40), comprenant :
un manchon interne (22) adapté pour être connecté dé façon fixe à l'extérieur d'un carter (42) du câble ;
un manchon externe (24) adapté pour être connecté de façon fixe à un composant du véhicule enclin aux vibrations (50), de façon coaxiale, avec le manchon interne (22) ; et
un espace annulaire intermédiaire entre le manchon interne (22) et le manchon externe (24), ledit espace intermédiaire étant rempli d'un matériau d'amortissement des vibrations (26), **caractérisé par** des moyens d'arrêt (28 ; 28) qui font saillie sur les côtés respectifs du manchon interne (22), qui sont maintenus à une certaine distance (d) du manchon externe (24), et qui sont adaptés pour s'engager avec le manchon externe (24) afin de limiter le déplacement axial relatif entre le manchon interne (22) et le manchon externe (24).

2. Amortisseur de vibrations selon la revendication 1, dans lequel le manchon interne (22) est destiné à être glissé sur, et fixé au niveau axial à, un dispositif de retenue (12) qui est connecté de façon fixe au carter (42).

3. Amortisseur de vibrations selon la revendication 2, dans lequel les moyens d'arrêt comprennent des brides radiales (28 ; 28) qui font saillie depuis le dispositif de retenue (12).

4. Amortisseur de vibrations selon la revendication 3, dans lequel les brides comprennent des rondelles séparées sur les côtés respectifs du manchon interne (22).

5. Amortisseur de vibrations selon l'une quelconque des revendications précédentes, dans lequel le manchon externe (24) est destiné à être inséré dans et connecté de façon fixe à un dispositif de retenue cylindrique (30) qui est lui-même destiné à être connecté de façon fixe au composant du véhicule (50).

6. Amortisseur de vibrations selon l'une quelconque des revendications précédentes, dans lequel le manchon interne (22) et le manchon externe (24) sont connectés de façon fixe au matériau d'amortissement des vibrations (26) afin de constituer une unité sous la forme d'une douille conventionnelle (20).

7. Utilisation d'une douille (20) selon la revendication 6 dans un amortisseur de vibrations selon l'une quelconque des revendications 1 à 5.
